# EUROPEAN PATENT APPLICATION

(11) **EP 2 738 550 A1**
(43) Date of publication of application: **04.06.2014**
(21) Application number: 13193753.4
(22) Date of filing: 21.11.2013
(51) Int. Cl.: G01N 27/28, B01L 9/00, G01N 27/327, G01N 27/30

(54) **An electrochemical sensing strip**

(30) Priority: 30.11.2012 CN 201210507399
(71) Applicant: Beijing Hong Yuan Xing Bang Technology Co., Ltd., 100176 Beijing Beijing (CN)
(72) Inventor: Lin, Chi-Yuang, 100176 Beijing (CN); Wang, Yuanwu, 100176 Beijing (CN)
(74) Representative: Oddstig, Tobias

(57) **Abstract**

The present invention provides an electrochemical sensing strip, comprising an electrochemical sensing strip body and an auxiliary support sheet disposed under the electrochemical sensing strip body. Compared to the prior art, the electrochemical sensing strip provided in the present invention has an auxiliary support sheet, which functions to support the electrochemical sensing strip body, so that the entire electrochemical sensing strip does not deform easily. Consequently, the resistance to bending of the electrochemical sensing strip is enhanced, and the occurrence of bending the electrochemical sensing strip during operation is reduced, and thus the test error of the electrochemical sensing strip is reduced.

## Description

### FIELD OF INVENTION

The present invention relates to the field of bio-electrochemical technique, in particular, to an electrochemical sensing strip.

### BACKGROUND OF THE INVENTION

For decades, electrochemical sensing strips have been widely applied in detection of various fluids, for example, testing concentration of blood glucose, uric acid, and cholesterol in blood, and concentration of substances such as heavy metals, pesticides, etc. in waste water.

An electrochemical sensing strip mainly comprises an insulated substrate, an electrode unit, an electrochemical reaction layer and a covering portion. At present, the commonly used insulated substrate is a plastic sheet with a thickness of 0.3 mm-0.7 mm. Since the plastic sheet is flexible, the electrochemical sensing strip is easily bent during operation by an operator, which may result in non-uniform distribution of test liquid in the reaction zone, or result in a bad contact of the sensing strip with the card slot, and thus result in larger test errors.

Furthermore, the electrode unit in existing electrochemical sensing strip has a relatively long conductive route, which leads to a larger resistance during electron conduction, and thereby enlarging the error of test signals.

To sum up, there is an increasing need for an electrochemical sensing strip, which can reduce the occurrence of bending the electrochemical sensing strip during operation, so as to reduce the test errors.

### SUMMARY OF INVENTION

To this end, an object of the present invention is to provide an electrochemical sensing strip to reduce bending of an electrochemical sensing strip, so as to reduce test errors of the electrochemical sensing strip.

To achieve the above object, the present invention provides the following technical solutions:
An electrochemical sensing strip, comprising:
   an electrochemical sensing strip body; and
   an auxiliary support sheet disposed under the electrochemical sensing strip body.

Preferably, in the above electrochemical sensing strip, the auxiliary support sheet has a thickness of 0.8 mm-1.5 mm.

Preferably, in the above electrochemical sensing strip, the auxiliary support sheet is a hard rubber sheet which adheres to the electrochemical sensing strip body.

Preferably, in the above electrochemical sensing strip, a mounting groove is provided on the top surface of the auxiliary support sheet, the mounting groove (21) extends on the top surface to an edge of the auxiliary support sheet (2) to form a side opening, and the electrochemical sensing strip body is located within the mounting groove.

Preferably, in the above electrochemical sensing strip, the auxiliary support sheet has a width of 35mm-45mm.

Preferably, in the above electrochemical sensing strip, the insulated substrate of the electrochemical sensing strip body is rectangular, which is 35 mm-45 mm long and 8mm-15mm wide, and the electrode in the electrode unit in the electrochemical sensing strip body is arranged along the length direction of the insulated substrate.

Preferably, in the above electrochemical sensing strip, the electrode unit comprises a working electrode made of carbon paste.

Preferably, in the above electrochemical sensing strip, the insulated substrate is a plastic sheet, on which is further disposed a hydrophilic layer.

Preferably, in the above electrochemical sensing strip, an information identification mark is disposed on the auxiliary support sheet.

Preferably, in the above electrochemical sensing strip, the information identification mark is an optical bar code printed on the auxiliary support sheet.

As can be seen from the above technical solutions, the electrochemical sensing strip provided in the present invention comprises an electrochemical sensing strip body and an auxiliary support sheet disposed under the electrochemical sensing strip body. Compared to the prior art, the electrochemical sensing strip provided in the present invention has an auxiliary support sheet, which functions to support the electrochemical sensing strip body, so that the entire electrochemical sensing strip does not deform easily. Consequently, the resistance to bending of the electrochemical sensing strip is enhanced, and the occurrence of bending the electrochemical sensing strip during operation thereof by the operator is reduced, and thus the test error of the electrochemical sensing strip is reduced.

### BRIEF DESCRIPTION OF THE DRAWINGS

To explain clearly the technical solutions in the examples of the present invention or those in the prior art, brief introduction of the drawings involved in the present invention will now be made as follows. Obviously, the drawings are only several embodiments of the present invention. For an ordinary skilled in the art, other figures can be obtained without creative efforts according to these figures.
Figure 1 is a schematic diagram of an electrochemical sensing strip according to an embodiment of the present invention;
Figure 2 is an exploded diagram of an electrochemical sensing strip according to an embodiment of the present invention.

### DESCRIPTION OF THE PREFERRED EMBODIMENTS

An embodiment provides an electrochemical sensing strip which reduces the occurrence of bending the electrochemical sensing strip, and thus reduces the test error of the electrochemical sensing strip.

In order make the objects, technical solutions and advantages of the present invention more clear, the technical solutions in the examples of the present invention will now be described more clearly and completely in conjunction with accompanying figures. Apparently, the examples described are only demonstrative examples of the present invention. On the basis of the examples of the present invention, other examples obtained by an ordinary skilled in the art without making any creative efforts, fall within the protection scope of the present invention.

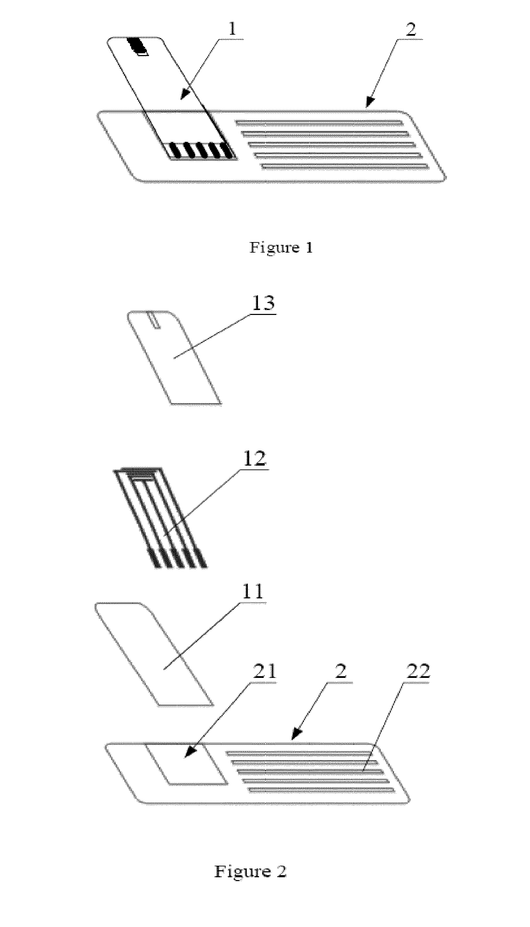

Refer to figures 1-2, there is provided an electrochemical sensing strip comprising an electrochemical sensing strip body 1 and an auxiliary support sheet 2 disposed under the electrochemical sensing strip body 1.
Compared to the prior art, the electrochemical sensing strip of the present invention has the auxiliary support sheet 2, which functions to support the electrochemical sensing strip body 1, so that the entire electrochemical sensing strip does not deform easily. Consequently, the resistance to bending of the electrochemical sensing strip is enhanced, and the occurrence of bending the electrochemical sensing strip during operation is reduced, and thus the test error of the electrochemical sensing strip is reduced.

It's appreciated that, the above electrochemical sensing strip body 1 is a sensing strip which can accomplish the testing function alone, and comprises an insulated substrate 11, a covering portion 13, an electrochemical reaction layer (un-shown in the figure) and an electrode unit 12, wherein a reaction groove is disposed on the insulated substrate 11; the electrochemical reaction layer is provided in the reaction groove for reacting with the substance to be tested; the electrode unit 12 is disposed in the reaction groove for detecting and transmitting signals generated by the electrochemical reaction, and the electrode unit 12 is surrounded by the electrochemical reaction layer; the covering portion 13 is disposed on the reaction groove, and comprises a testing hole which is in communication with the reaction groove. The above electrochemical reaction layer is obtained by applying chemical reagents on both the reaction groove and the electrode unit 12 and allowing the chemical reagents drying.

When testing by means of the electrochemical sensing strip, the substance to be tested is dripped into the test hole of the covering portion 13, and allowed an electrochemical reaction with the electrochemical reaction layer. The electrode unit 12 can detect the signals generated by the electrochemical reaction and transmit the signals to the detector through a wire connected thereto. Test results are obtained through analysis of the detector.

The thicker the auxiliary support sheet 2 is, the stronger the resistance to bending is. However, the volume thereof increases with an increasing thickness. In order to increase the resistance to bending of the electrochemical sensing strip and decrease the volume thereof at the same time, so as to facilitate carrying and testing of the electrochemical sensing strip, the thickness of the auxiliary support sheet 2 is preferably 0.8 mm - 1.5 mm. The thickness of the auxiliary support sheet 2 can be 1 mm or any value between 0.8 mm - 1.5 mm. Certainly, the thickness of the auxiliary support sheet 2 can also be other values, and no specific limitation is made in this example. The value should satisfy the requirement that the thickness of the entire electrochemical sensing strip is larger than that of the existing electrochemical sensing strip, so as to achieve the object of improving resistance to bending thereof.

Compared to the electrochemical sensing strip in the prior art which comprises an insulated substrate 11 with a thickness of 0.3 mm - 0.7 mm, the electrochemical sensing strip of the present invention has an increased thickness. Therefore, the auxiliary support sheet 2 can provide the electrochemical sensing strip body 1 with a relatively stable auxiliary supporting, which makes the entire electrochemical sensing strip not deform easily, and improves the tensile resistance, bending resistance, compression resistance and impact strength of the electrochemical sensing strip. As a result, the occurrence of bending the electrochemical sensing strip during operation can be reduced, and thus the test error of the electrochemical sensing strip is reduced.

Preferably, in the electrochemical sensing strip, the auxiliary support sheet 2 is a hard rubber sheet, which adheres to the electrochemical sensing strip body 1. Compared to the other plastic sheet, the hard rubber sheet has a relatively larger hardness, and enhances the support force to the electrochemical sensing strip body 1. Therefore, the electrochemical sensing strip body 1 does not deform easily. Meanwhile, to assure the good join between the hard rubber sheet and the electrochemical sensing strip body 1, an adhesive layer is disposed between the hard rubber sheet and the electrochemical sensing strip body 1. Through the adhesive layer, the hard rubber sheet and the electrochemical sensing strip body 1 are combined firmly. Further, the area of the adhesive layer should be comparable to that of the hard rubber sheet in contact with the electrochemical sensing strip body 1, so as to achieve the best adhesive effect.

The above auxiliary support sheet 2 may also be made of other hard materials, such as hard plastics like PET (Polyethylene terephthalate), or other polymeric compounds.

In an electrochemical sensing strip provided in another example, a mounting groove 21 is disposed on the top surface of the auxiliary support sheet 2, and the electrochemical sensing strip body 1 is located within the mounting groove 21. The mounting groove (21) extends on the top surface to an edge of the auxiliary support sheet (2) to form a side opening. To manufacturing such an electrochemical sensing strip, the mounting groove 21 is firstly formed on the top surface of the auxiliary support sheet 2. In order to conveniently place the electrochemical sensing strip body 1 into the mounting groove 21, the mounting groove 21 preferably extends on the top surface to an edge on the long side of the auxiliary support sheet (2), so as to form a side opening on the long side. Then, the adhesive layer is applied to the bottom surface of the mounting groove 21, and the electrochemical sensing strip body 1 slides from the side opening of the mounting groove 21 into the mounting groove 21, so that the lowest insulated substrate 11 of the electrochemical sensing strip body 1 is attached to the auxiliary support sheet 2. In order to conveniently drip the substance to be tested into the test hole, in this example, the test hole in the electrochemical sensing strip body 1 is preferably disposed close to the edge.

In the above structure, the mounting groove 21 is capable of fixing the electrochemical sensing strip body 1 on the auxiliary support sheet 2, so that the auxiliary support sheet 2 provides a better support for the electrochemical sensing strip body 1.In this way, the sliding down of the electrochemical sensing strip body 1 can be avoided, and the electrochemical sensing strip body 1 is endowed with a better resistance to bending. Meanwhile, the requirement for the relative dimensions between the electrochemical sensing strip body 1 and the mounting groove 21 are not very strict, as long as the width of the mounting groove 21 is lager than that of the electrochemical sensing strip body 1, that is, allowing the electrochemical sensing strip body 1 to be placed into the mounting groove 21, which facilitates the processing of the mounting groove 21 and improves the production efficiency. Certainly, the electrochemical sensing strip body 1 can be directly attached to the top surface of the auxiliary support sheet 2 by use of adhesive. The present invention makes no limitation in this regard.

As will be appreciated by a person skilled in the art, the mounting groove 21 may also be formed from the edge on the short side of the auxiliary support sheet 2 to inside thereof. That is, the mounting groove 21 extends on the top surface to an edge on the short side of the auxiliary support sheet (2), so as to form a side opening on the short side. Moreover, the above mounting groove 21 may also be formed at the center of top surface of the auxiliary support sheet 2, so that the mounting groove 21 does not possess a side opening. However, in this case, the size of the mounting groove 21 has to be able to hold the electrochemical sensing strip body 1.

In the electrochemical sensing strips, the width of the auxiliary support sheet 2 is 35 mm - 45 mm. More specifically, the width of the auxiliary support sheet 2 may be 35 mm, 40 mm, or any value between 35 mm and 45 mm. In this way, the auxiliary support sheet 2 has a relatively less width, and is easy to carry. Certainly, the width of the auxiliary support sheet 2 can also be other values, provided that the test function of the electrochemical sensing strip can be achieved.

To facilitate the manufacturing of the electrochemical sensing strip, preferably, the insulated substrate 11 is rectangular, with a length of 35 mm - 45 mm and width of 8 mm - 15 mm, and the electrodes in the electrode unit 12 is arranged along the length direction of the insulated substrate. In this way, the mounting groove 21 for holding the electrochemical sensing strip body 1 is a rectangular groove, which is easy be processed. Furthermore, compared to other regular shapes, rectangular insulated substrate 11 machines may be easily processed, and simplifies the structure of the electrochemical sensing strip. Therefore, the electrochemical sensing strip may be manufactured easily, and thus the production efficiency is improved.

The traditional electrochemical sensing strip is 35 mm - 45 mm wide. Compared to the above sizes, the size of the auxiliary support sheet of the present invention is comparable to that of the traditional electrochemical sensing strip. In this example, the length of the insulated substrate 11 in the electrochemical sensing strip body 1 is 35 mm - 45 mm, and the width thereof is 8 mm - 15 mm, i.e., the length thereof is comparable to the width of the existing electrochemical sensing strip. Therefore, the size of the electrochemical sensing strip body 1 is greatly decreased, thereby reducing the size of the electrode unit 12. Consequently, the impedance of the test electrode in the electrode unit 12 is effectively reduced, and thus the error of the test signals is reduced.

Preferably, to decrease the cost of manufacturing, in the electrochemical sensing strip as provided in the above example, the working electrodes of the electrode unit 12 are made of carbon paste. Since carbon does not react with inert metals at a low temperature, chemical interference does not generate. Further the cost thereof is relatively low. If the electrochemical sensing strip is disposable, using a carbon electrode made of carbon paste as the working electrode can reduce the cost of manufacturing greatly. Certainly, other suitable electrode material should be selected according to nature of the chemical substance to be tested, and this example makes no specific limitation in this regard.

Specifically, in the electrochemical sensing strip according to an example of the present invention, the insulated substrate 11 is a plastic sheet, a hydrophilic layer is further disposed on the plastic sheet. The hydrophilic layer facilitates the chemical reaction between the substance to be tested and the electrochemical reaction layer, and can assure the precision of the signals generated in the electrochemical reaction.

In order to further optimize the above technical solutions, an information identification mark can be disposed on the auxiliary support sheet 2. The information identification mark endows the electrochemical sensing strip with identifiable information, and endows it with the function of being used as a parameter or identification code, so that the measurer can easily carry out systematic information identification.

After the electrochemical sensing strip is manufactured, the operator may carry out the inter-assay on the auxiliary support sheet 2, and determine the differences between individual sensing strips, so as to avoid occurrence of a wrong test value due to system error.

Specifically, in the electrochemical sensing strip as provided in the above examples, the information identification mark is an optical bar code 22 printed on the auxiliary support sheet 2. As will be appreciated by a person skilled in the art, the above information identification mark may also be a number or a symbol printed on the auxiliary support sheet 2, or a perforate strip, a magnetized film, a fluorescent agent, a conductive medium applied on the auxiliary support sheet 2. Alternatively, the electrochemical sensing strip may be provided with other identifiable information through other process such as casting.

The individual example in the present invention is described in an illustrative way. In each example, the different parts among the examples are emphasized, and these different parts also are applicable to other example.

While the present invention has been described with respect to the specific embodiments, it will be apparent to those skilled in the art that various changes and modifications may be made without departing from the spirit and scope of the invention as defined in the following claims.

## Claims

1. An electrochemical sensing strip, comprising:
an electrochemical sensing strip body (1); and
an auxiliary support sheet (2) disposed under the electrochemical sensing strip body (1).

2. The electrochemical sensing strip according to claim 1, **characterized in that** the auxiliary support sheet (2) has a thickness of 0.8 mm to 1.5 mm.

3. The electrochemical sensing strip according to claim 1, **characterized in that** the auxiliary support sheet (2) is a hard rubber sheet, and the hard rubber sheet adheres to the electrochemical sensing strip body (1).

4. The electrochemical sensing strip according to claim 2, **characterized in that** the auxiliary support sheet (2) is configured to have a mounting groove (21) on the top surface, the mounting groove (21) extends on the top surface to an edge of the auxiliary support sheet (2) so as to form a side opening, and the electrochemical sensing strip body (1) is located within the mounting groove (21).

5. The electrochemical sensing strip according to claim 1, **characterized in that** the auxiliary support sheet (2) has a width of 35 mm to 45 mm.

6. The electrochemical sensing strip according to claim 5, **characterized in that** the electrochemical sensing strip body (1) comprises an insulated substrate (11) and an electrode unit (12), the shape of the insulated substrate (11) is rectangle with a length of 35 mm to 45 mm and a width of 8 mm to 15 mm, and the electrode in the electrode unit (12) is arranged along the length direction of the insulated substrate (11).

7. The electrochemical sensing strip according to claim 6, **characterized in that** the electrode unit (12) comprises a working electrode made of carbon paste.

8. The electrochemical sensing strip according to claim 7, **characterized in that** the insulated substrate (11) is a plastic sheet, and a hydrophilic layer is disposed on the plastic sheet.

9. The electrochemical sensing strip according to any one of claims 1-8, **characterized in that** an information identification mark is disposed on the auxiliary support sheet (2).

10. The electrochemical sensing strip according to claim 9, **characterized in that** the information identification mark is an optical bar code (22) printed on the auxiliary support sheet (2).
